# EUROPÄISCHE PATENTSCHRIFT

(11) **EP 3 217 594 B1**
(45) Veröffentlichungstag und Bekanntmachung des Hinweises auf die Patenterteilung: **31.10.2018**
(21) Anmeldenummer: 17159338.7
(22) Anmeldetag: 06.03.2017
(51) Int. Cl.: H04L 12/10, H04L 12/40, H04L 29/12, G06F 12/06

(54) **BUSMODUL UND BUS-INITIALISIERUNGSVERFAHREN**
BUS MODULE AND BUS INITIALIZING METHOD
MODULE BUS ET SON PROCÉDÉ D'INITIALISATION

(30) Priorität: 11.03.2016 DE 102016204084
(43) Veröffentlichungstag der Anmeldung: 13.09.2017
(73) Patentinhaber: Deutsche Lichtmiete GmbH, 26135 Oldenburg (DE)
(72) Erfinder: HAHN, Alexander, 26123 Oldenburg (DE); REMITZ, Hans-Jörg, 27721 Ritterhude (DE)
(74) Vertreter: Eisenführ Speiser

(56) Entgegenhaltungen:
- EP-A1- 1 622 039
- WO-A1-2011/095857
- US-A1- 2010 274 945

## Beschreibung

Die vorliegende Erfindung betrifft ein Busmodul, ein Bus-Initialisierungsverfahren, ein Bus-Hauptmodul sowie ein Bussystem.

Bussysteme sind grundsätzlich aus dem Stand der Technik bereits bekannt. Gerade bei umfangreichen Systemen, die aus einer Vielzahl von Busmodulen zusammengesetzt sind, wirft die Adressierung aller Teilnehmer eines Bussystem jedoch immer wieder Probleme auf oder gestaltet sich sehr aufwendig, da ein hoher Adress-Programmierungsaufwand für jedes einzelne Busmodul erforderlich ist.

Die Druckschrift US2010/0274945 A1, beschreibt ein Businitialisierungsverfahren in einem Busmodule, bei dem eine Selbstadressierung stattfindet. Dabei geht die Initialisierung des Selbstadressierungsprozesses immer von einem Bushauptmodul aus.

Die Druckschrift EP1622039 A1, beschreibt keine Selbstadressierung, sondern eine von einem Master an die als Slave ausgebildeten Module ausgegebene Adressierung.

Es ist daher Aufgabe der vorliegenden Erfindung die Adressierung aller Teilnehmer eines Bussystems zu verbessern.

Diese Aufgabe wird gelöst durch ein Busmodul, und ein Bus-Initialisierungsverfahren für ein Bussystem.

Gemäß einem ersten Aspekt betrifft die Erfindung ein Busmodul mit einem Controller zum Ansteuern eines Sensors oder Aktors, mit einem Buseingang und einem Busausgang, wobei das Busmodul über den Buseingang und den Busausgang kaskadierbar ist und der Buseingang und der Busausgang über eine schaltbare Verbindung verbunden sind.

Die Erfindung geht von der Erkenntnis aus, dass eine relativ einfache Adressierung auch großer Kaskaden von Busmodulen möglich ist, wenn die Adressierung der einzelnen Busmodule der Kaskade streng sequentiell erfolgt, wenn also die Busmodule einer Kaskade nacheinander, aufbauend auf den Adressierungen der Busmodule weiter vorne in der Kaskade, adressiert werden können. Mit anderen Worten schließt die Erfindung die Erkenntnis ein, das eine streng sequentielle Adressierung aller Module einer Kaskade eine effiziente Art der Adressierung, nämlich die Verwendung stetig weiter inkrementierter Adressen für die Busmodule einer Kaskade erlaubt. Damit ist gemäß der Erfindung kein Adress-Programmieraufwand eines individuellen Busmoduls mehr erforderlich.

Das Busmodul gemäß der Erfindung beruht auf der Erkenntnis, dass über das Vorsehen einer schaltbaren Verbindung zwischen dem Buseingang und dem Busausgang eines kaskadierbaren Busmodules sichergestellt werden kann, dass bei Verwendung eines solchen Busmodules innerhalb eines Bussystems, also einer Kaskade von Busmodulen, die Adressierung der Busmodule streng sequentiell erfolgt. Über die schaltbare Verbindung kann die Kommunikation zwischen Buseingang und Busausgang unterbrochen werden, so dass nachfolgende Busmodule in der Kaskade von der Kommunikation über den Bus abgeschnitten werden können, der Busausgang also stumm geschaltet ist, und so erst eine - ungestörte - Adressierung des einen Busmodules erfolgen kann, bevor ein nächstes Busmodul an die Kommunikation angeschlossen wird. Buseingang und Busausgang sind dabei zur Übertragung von Informationen über den Bus ausgebildet.

Bevorzugt ist das Busmodul zur Kommunikation mittels SPI-Protokoll ausgebildet. Andere Protokolle, wie beispielsweise Profibus, sind alternativ oder zusätzlich möglich.

In einer Ausführungsform des Busmodules umfasst die schaltbare Verbindung mindestens einen Schalter, insbesondere einen bidirektionalen Schalter auf Halbleiterbasis, bevorzugt einen bidirektionaler FET-Schalter. Über einen Schalter kann ein Stumm- oder Aktivschalten des Busausgang besonders einfach realisiert werden. Bidirektionale Schalter auf Halbleiterbasis sind vorteilhaft, da sie zum einen im Unterschied zu mechanischen Schaltern keine mechanischen und damit verschleißanfälligen Komponenten enthalten und trotzdem auch eine bidirektionale Kommunikation über den Bus, auch zwischen Buseingang und Busausgang ermöglichen, die für den Informationsaustausch über den Bus essentiell ist.

Bevorzugt ist der Controller ausgebildet, ein Öffnen oder Schließen der schaltbaren Verbindung zu veranlassen. Damit kann im Busmodul selbst über den Controller ein Öffnen oder Schließen der schaltbaren Verbindung veranlasst werden. Hierbei wird unter einer offenen schaltbaren Verbindung verstanden, dass Buseingang und Busausgang nicht verbunden sind und unter einer geschlossenen Verbindung, dass Buseingang und Busausgang verbunden sind, die Verbindung also nicht unterbrochen ist.

Vorteilhaft ist in einem Ausgangszustand die schaltbare Verbindung offen. Damit kann sichergestellt werden, dass ein Busmodul, dass neu an ein Bussystem angeschlossen wird, immer eine offene schaltbare Verbindung aufweist und damit eine streng sequentielle Adressierung möglich ist.

In einer weiteren Ausführungsform ist der Controller ausgebildet, auf den Empfang eines Reset-Signales hin, ein Öffnen der schaltbaren Verbindung zu veranlassen. Damit kann über den Controller ein Unterbrechen der Verbindung, also ein Stummschalten des Busausgangs, zum Beispiel vor dem Einbau in ein Bussystem oder unmittelbar danach, sichergestellt werden. Es ist dabei insbesondere vorteilhaft, wenn das Busmodul einen mechanischen Auslöser umfasst, der ausgebildet ist, das Reset-Signal auszugeben. Damit kann beispielsweise vor der Installation eines Bussystems oder eines neuen Busmodules in ein bestehendes Bussystems vom Monteur über einen einfachen Knopfdruck das Busmodul für die Installation vorbereitet werden.

In einer vorteilhaften Ausführungsform ist das Busmodul als Zwei-Draht-Busmodul ausgebildet ist, bei dem eine Beaufschlagung des Busmoduls mit einer Modulversorgungsspannung über den Buseingang erfolgen kann. Damit genügt es, dass zwei Leitungen für das Busmodul zur Verfügung stehen. Alternativ weist das Busmodul einen vom Buseingang separaten Modulversorgungseingang auf, über den der Controller versorgt werden kann, und einen Modulversorgungsausgang, auf den der Modulversorgungseingang durchgeschleift ist. Auch der Modulversorgungsausgang ist dabei separat vom Busausgang ausgebildet.

In einer bevorzugten Ausführungsform ist der Controller ausgebildet, bei Empfang eines vorbestimmten Buseingangssignals über den Buseingang oder bei Modulspannungsbeaufschlagung des Buseingangs eine Initialisierungsroutine durchzuführen und erst nach Abschluss der Initialisierungsroutine das Schließen der schaltbaren Verbindung zu veranlassen. Nach Empfang eines entsprechenden vorbestimmten Buseingangssignales über den Buseingang oder bei Beaufschlagung des Buseingangs mit der Modulspannung kann somit eine Initialisierungsroutine ausgelöst werden und gleichzeitig wird sichergestellt, dass die Verbindung zwischen Buseingang und Busausgang bis zum Abschluss dieser Routine offenbleibt, die Initialisierung also vollständig ablaufen kann, bevor ein weiteres Busmodul an die Kommunikation in einem entsprechenden Bussystem angeschlossen wird.

In einer weiteren Ausführungsform ist der Controller ausgebildet, die Initialisierungsroutine erst nach einer vorbestimmten Zeitspanne durchzuführen, insbesondere ist dies vorteilhaft, wenn die Initialisierungsroutine nach Beaufschlagung des Buseingangs mit der Modulspannung ausgelöst. Hier kann noch abgewartet werden, ob nach der Beaufschlagung ein weiteres Buseingangssignal, beispielsweise von einem angeschlossenen Bus-Hauptmodul eingeht, und erst nach einer vorbestimmten Zeitspannen, wenn kein weiteres Buseingangssignal eingegangen ist, die Initialisierungsroutine gestartet werden.

Bevorzugt ist der Controller ausgebildet, das Busmodul im Rahmen der Initialisierungsroutine mit einer vorbestimmten Startadresse zu initialisieren. Dies erlaubt eine Voradressierung des Busmodules selbst. Es ist dabei bevorzugt, wenn der Controller ausgebildet ist, im Rahmen der Initialisierungsroutine, das Öffnen der schaltbaren Verbindung vor oder gleichzeitig mit dem Initialisieren des Busmodules mit der vorbestimmten Startadresse zu veranlassen.

In einer bevorzugten Ausführungsform ist der Controller ausgebildet, dem Busmodul eine inkrementierte Adresse selbst zuzuweisen. Damit ist eine Selbstadressierung des Busmodules unabhängig von einem Bus-Hauptmodul möglich. Es ist insbesondere vorteilhaft, wenn der Controller ausgebildet ist, die inkrementierte Adresse ausgehend von der vorbestimmten Startadresse zu inkrementieren, falls das Busmodul nach Initialisieren mit der vorbestimmten Startadresse kein Adresssignal eines verbundenen Busmodules erhält und/oder der Controller ausgebildet ist, falls das Busmodul nach Initialisieren mit der vorbestimmten Startadresse ein Adresssignal eines verbundenen Busmodules erhält, die inkrementierte Adresse ausgehend von einer Adresse entsprechend dem Adresssignal zu inkrementieren. Damit ist eine einfache und effiziente Selbstadressierung des Busmodules möglich.

Alternativ oder ergänzend ist der Controller in einer weiteren Ausführungsform ausgebildet, eine inkrementierte Adresse für das Busmodul von einem Bus-Hauptmodul zu empfangen.

In einer weiteren Ausführungsform ist der Controller ausgebildet, wenn nach dem Schließen der schaltbaren Verbindung kein Adresssignal eines verbundenen Busmodules mit der Startadresse empfangen wird, einen Steuerbetrieb für den Aktor oder Sensor zu beginnen. Zusätzlich oder alternativ kann der Controller ausgebildet sein, wenn kein Adresssignal eines verbundenen Busmodules empfangen wird, nicht nur den eigenen Steuerbetrieb zu beginnen, sondern auch ein Signal an in einem Bussytem angeschlossene weitere Busmodule auszugeben, dass das Bussystem vollständig adressiert wurde und sämtliche Busmodule den Steuerbetrieb beginnen.

Der Controller ist in einer weiteren Ausführungsform ausgebildet, nach Abschluss der Initialisierungsroutine bei Wegfall der Modulversorgungsspannung die dem Busmodul zugewiesene Adresse zu speichern und bei Wiederbeaufschlagung mit der Modulversorgungsspannung diese zugewiesene Adresse zu verwenden. Über diese Funktion kann sichergestellt werden, dass beispielsweise nach einem kurzzeitigen Stromausfall keine erneute Initialisierungsroutine gestartet werden muss, sondern ein bereits fertig adressierter Bus weiterhin mit der zugewiesenen Adresse arbeiten kann.

Weiterhin ist es vorteilhaft, wenn der Controller ausgebildet ist, auf einen empfangenen Reset-Broadcast-Befehl hin oder bei Abkopplung von einem Bussystem, die Adresse des Busmodules auf die vorbestimmte Startadresse zurückzusetzen. Damit kann insbesondere beim Einbau eines neuen Busmodules zwischen Busmodule einer bestehenden Kaskade entweder eine erneute Initialisierung der gesamten Kaskade ermöglicht werden oder auch nur eine Initialisierung der Busmodule in der Kaskade hinter dem neuen Busmodule, wenn der Broadcast-Befehl nur an diese gerichtet wird. Der Reset-Broadcast-Befehl kann beispielsweise bei Drücken eines mechanischen Auslöser am Busmodul ausgeben werden und so unkompliziert ein Busmodul oder auch alle Busmodule auf die vorbestimmte Startadresse zurückgesetzt werden. In einer vorteilhaften Weiterbildung wird beim Drücken eines mechanischen Auslöser gleichzeitig ein Reset-Signal wie vorstehend beschrieben ausgegeben und damit neben dem Zurücksetzen der Adressen auch ein Öffnen der schaltbaren Verbindungen veranlasst.

Es wird somit auch ermöglicht, unkompliziert neue Busmodule in eine bestehende Kaskade aus Busmodulen einzufügen. Ein neu eingefügtes Busmodul startet nach dem Einbau beim Empfang eines Buseingangssignales oder Anliegen der Modulversorgungsspannung am Buseingang die Initialisierungsroutine. Empfängt es ein Adresssignal eines Busmodules, so muss dieses, da die schaltbare Verbindung des neuen Busmodules offen ist, von einem Busmodul in der Kaskade vor ihm stammen, auf Basis dieses Adresssignales kann der Controller dem neuen Busmodul dann eine inkrementierte Adresse zuweisen und die weiteren Busmodule, deren Adresse zuvor entweder auf Grund des Abkoppelns oder des Reset-Broadcast-Befehles auf die Startadresse zurückgesetzt wurde, intialisieren und adressieren sich dann entsprechend neu. Damit kann ein hoher Umprogrammierungsaufwand vermieden werden.

Gemäß einem zweiten Aspekt betrifft die Erfindung ein Bus-Hauptmodul zum Betreiben einer Kaskade von vorstehend beschriebenen Busmodulen als Slave, wobei das Bus-Hauptmodul einen Busanschluss zum Anschließen der Busmodule und zum Senden eines Bussignals an und/oder zum Empfangen eines Bussignal von dem Busmodul aufweist und wobei das Bus-Hauptmodul ausgebildet ist, einem ersten in der Kaskade befindlichen Busmodul eine inkrementierte Adresse zuzuweisen und jedem weiteren in der Kaskade befindlichen Busmodul eine weiterinkrementierte Adresse zuzuweisen. Ein solches Bus-Hauptmodul ermöglicht eine einfache und streng sequentielle Adressierung einer Kaskade. Dies ist insbesondere vorteilhaft, wenn Busmodule verwendet werden, deren Controller nicht ausgebildet sind, dem Busmodul selbst eine inkrementierte Adresse zuzuweisen. In einer bevorzugten Weiterbildung ist das Bus-Hauptmodul ausgebildet, zu detektieren, dass dem Busmodul dem zuletzt eine weiterinkrementierten Adresse zugewiesen wurde, kein weiteres Busmodul nachgeschaltet ist und einen Steuerbetrieb der Busmodule für den jeweiligen Aktor oder Sensor zu beginnen. Weiter ist es bevorzugt, wenn das Bus-Hauptmodul ausgebildet ist, eine vorzugsweise drahtlose Netzwerkverbindung zu initiieren, vorzugsweise eine WLAN-Verbindung, über die Steuersignale von einem Netzwerkgerät, vorzugsweise einem Mobilgerät, empfangen werden können und das Bus-Hauptmodul ausgebildet ist, über die Netzwerkverbindung empfangene Steuersignale an die Busmodule weiterzuleiten und/oder von den Busmodulen erhaltene Statussignale an das Netzwerkgerät zu übertragen.

Gemäß einem dritten Aspekt betrifft die Erfindung ein Bussystem umfassend eine Kaskade von vorstehend beschriebenen Busmodulen. Insbesondere betrifft die Erfindung ein Bussystem, bei dem jedes Busmodul der Kaskade von Busmodulen ausgebildet ist, sich mit ein- und derselben Startadresse zu initialisieren. Darüber ist sichergestellt, dass die Startadresse jedes Busmodules jedem anderen Busmodul bekannt ist. In einer Ausführungsform umfasst das Bussystem zusätzlich ein Bus-Hauptmodul wie vorstehend beschrieben

Gemäß einem vierten Aspekt betrifft die Erfindung ein Bus-Initialisierungsverfahren für ein Bussystem mit einer Kaskade von Busmodulen, insbesondere Busmodulen der vorbeschriebenen Art, mit den Schritten:
- Initialisieren der Busmodule mit ein- und derselben Startadresse, wobei das Initialisieren durch einen jeweiligen Controller des Busmodules selbst und für alle Busmodule unabhängig voneinander erfolgt;
- Zuweisen einer inkrementierten Adresse an ein erstes in der Kaskade befindliches Busmodul und Schließen einer schaltbaren Verbindung zwischen einem Buseingang und einem Busausgang des ersten in der Kaskade befindlichen Busmoduls durch den Controller des Busmoduls selbst;
- Zuweisen einer weiterinkrementierten Adresse an ein nächstes in der Kaskade befindliches Busmodul und Schließen einer schaltbaren Verbindung zwischen einem Buseingang und einem Busausgang dieses nächsten in der Kaskade befindliche Busmoduls durch den Controller dieses nächsten Busmoduls selbst.

Bus-Hauptmodul, Bussystem und Bus-Initialisierungsverfahren teilen die mit Bezug auf das Busmodul beschriebenen Vorteile.

In einer bevorzugten Ausführungsform erfolgt das Initialisieren eines jeweiligen Busmodules mit der Startadresse nach Empfangen eines vorbestimmten Buseingangssignals über den Buseingang oder Modulspannungsbeaufschlagen des Buseingangs des jeweiligen Busmoduls. Weiter ist es bevorzugt, wenn das Bus-Initialisierungsverfahren vor oder gleichzeitig mit dem Initialisieren den Schritt des Öffnen der schaltbaren Verbindung umfasst. In einer weiteren Ausführungsform erfolgt das Öffnen gleichzeitig mit einem Modulspannungsbeaufschlagen des Buseingangs oder des Modulversorgungseingangs.

Es ist weiterhin bevorzugt, dass das Zuweisen der inkrementierten Adresse an das erste in der Kaskade befindliche Busmodul und das Zuweisen der weiterinkrementierten Adresse durch den Controller des Busmodules selbst oder durch ein Bus-Hauptmodul erfolgt. In einer Ausführungsform wird das Bus-Initialisierungsverfahren iterativ für jedes weitere etwaig in der Kaskade befindliche Busmodul durchgeführt.

In einer weiteren Ausgestaltung wird das Bus-Initialisierungsverfahren beendet, wenn von einem Bus-Hauptmodul detektiert wird, dass dem Busmodul dem zuletzt eine weiterinkrementierten Adresse zugewiesen wurde, kein weiteres Busmodul nachgeschaltet ist oder wenn das zuletzt weiterinkrementierte Busmodul kein Adresssignal mit der Startadresse von einem weiteren Busmodul empfängt.

Die Erfindung betrifft weiter ein Busmodul mit einem Controller zum Ansteuern einer Deckenleuchte,wobei das Busmodul ausgestattet ist mit einem Buseingang und einem Busausgang. Das Busmodul ist über den Buseingang und den Busausgang kaskadierbar. Das Busmodul weist einen Leistungseingang zum Anschluss eines externen vorzugsweise dimmbaren LED Netzteils auf. Das Busmodul weist weiterhin einen Leistungsausgang zum Anschluss eines LED-Leuchtmittels der Deckenleuchte auf.

In einer besonders bevorzugten Ausgestaltung ist der Leistungseingang zum Leistungsausgang schaltbar durchgeschleift. Vorzugsweise ist der Leistungseingang zum Leistungsausgang mittels eines Relais schaltbar durchgeschleift.

In einer weiteren Ausgestaltung weist das Busmodul einen Steuereingang zum Ausgeben eines Steuersignals auf, wobei das Steuersignal zum Ansteuern wenigstens eines von der Deckenleuchte umfassten Antriebs bestimmt sein kann. Vorzugsweise ist der Steuereingang ausgebildet eine Versorgungsspannung für den Antrieb auszugeben. In einer bevorzugten Ausgestaltung ist die Versorgungsspannung bezüglich einer am Leistungseingang anliegenden Spannung herabgesetzt.

Die Versorgungsspannung kann von der am Leistungseingang anliegenden Spannung abgezweigt sein. Alternativ kann die Versorgungsspannung für den Antrieb durch ein separates Netzteil bereitgestellt sein, beispielsweise ein 5 V Netzteil.

In einer besonders bevorzugten Ausgestaltung weist das Busmodul einen Modulversorgungseingang auf über den der Controller unabhängig von der am Leistungseingang anliegende Spannung versorgt werden kann. Weiter bevorzugt weist das Busmodul einen Modulversorgungsausgang auf. Der Modulversorgungseingang kann auf den Modulversorgungsausgang durchgeschleift sein. Derart ist auch ein Kaskadieren des Busmoduls aus Spannungsversorgungssicht möglich.

In einer vorteilhaften Weiterbildung sind Buseingang und Modulversorgungseingang als ein gemeinsamer Eingang und Busausgang und Modulversorgungsausgang als ein gemeinsamer Ausgang realisiert, mit anderen Worten das Busmodul ist ein Zwei-Draht-Busmodul. Es genügen also nur zwei Leitungen, hier beispielhaft als DIM+ und DIMbezeichnet, um Information und Versorgung für das Busmodul bereitzustellen.

Es ist weiterhin vorteilhaft, wenn das Busmodul einen Busschalter, beispielsweise in Form eines Relaiskontaktes oder als Schalter auf Halbleiterbasis, beispielsweise einen FET-Schalter aufweist, zwischen dem gemeinsamen Eingang und dem gemeinsamen Ausgang aufweist. Mit Hilfe des Busschalters kann in einem sich selbstadressierenden Bus-Initialisierungsverfahren, das im Nachfolgenden näher beschrieben wird, sichergestellt werden, dass eine Durchschaltung des Busmodules in Abhängigkeit einer zuvor erfolgten Adressierung gesteuert werden kann; also dass beispielsweise eine Durchschaltung eines Busmodules durch Schließen des Busschalters erst erfolgt, wenn das jeweilige Busmodul adressiert wurde.

Es hat sich als vorteilhaft herausgestellt, wenn der Buseingang potentialfrei ausgebildet ist. Dies erfolgt vorzugsweise mittels eines oder mehrerer Optokoppler.

Es hat sich als besonders vorteilhaft herausgestellt wenn der Controller ausgebildet ist, bei Empfang eines Buseingangssignals über den Buseingang eine Initialisierungsroutine durchzuführen und erst nach Abschluss der Initialisierungsroutine ein oder das Buseingangssignal über den Busausgang auszugeben. Mit anderen Worten wird vorzugsweise nach Abschluss der Initialisierungsroutine der Buseingang zum Busausgang transparent geschalten. Derart kann ein Bus Hauptmodul beispielsweise ein diesem Busmodul nachgeschaltet des Busmodul adressieren. Vorzugsweise ist dies vor Abschluss der Initialisierungsroutine nicht möglich.

Es hat sich als vorteilhaft herausgestellt, wenn das Busmodul ausgebildet ist, sich nach Spannungsbeaufschlagung des Modulversorgungseingangs zunächst mit einer Startadresse zu initialisieren und/oder den Busausgang stumm zu schalten.

Bevorzugt ist das Busmodul zur Kommunikation mittels SPI-Protokoll ausgebildet. Andere Protokolle, wie beispielsweise Profibus, sind alternativ oder zusätzlich möglich.

Bezüglich des Bus-Hauptmoduls wird die Erfindung gelöst durch ein Bus-Hauptmodul zum Betreiben wenigstens eines Busmoduls, vorzugsweise eines vorbeschriebenen Busmoduls als Slave. Das Bus-Hauptmodul wird vorzugsweise als Master betrieben. Das Bus-Hauptmodul weist einen Busanschluss zum anschließen des Busmoduls und zum Senden eines Bussignals an und/oder empfangen eines Bussignals von dem Busmodul auf.

In einer besonders bevorzugten Ausgestaltung ist das Bus-Hauptmodul ausgebildet eine Netzwerkverbindung zu initiieren oder einer solchen beizutreten. Vorzugsweise ist die Netzwerkverbindung eine drahtlose Netzwerkverbindung. Besonders bevorzugt ist die Netzwerkverbindung eine WLAN-Verbindung. Alternativ oder zusätzlich kann das Bus-Hauptmodul ausgebildet sein eine Bluetooth Verbindung oder dergleichen zu initiieren oder einer solchen beizutreten. Alternativ oder zusätzlich kann das Bus-Hauptmodul einen KNX-Kommunikationsbaustein aufweisen. Das Bus-Hauptmodul fungiert vorzugsweise als Bridge zwischen verschiedenen Übertragungssystemen, vorzugsweise beispielsweise als Bridge zwischen WLAN und einem SPI-Bus.

In einer bevorzugten Ausgestaltung ist das Bus-Hauptmodul ausgebildet eine Netzwerkverbindung zu initiieren über die für die Deckenleuchte bestimmte Steuersignal von einem Netzwerkgerät, vorzugsweise einem Mobilgerät, empfangen werden können. Das Bus-Hauptmodul kann ausgebildet sein über die Netzwerkverbindung empfangene Steuersignale an das Busmodul weiterzuleiten und/oder von dem Busmodul erhaltene Statussignale an das Netzwerkgerät zu übertragen.

Bezüglich des Beleuchtungssystems wird die Erfindung gelöst durch ein Beleuchtungssystem mit einer Mehrzahl von Deckenleuchten, einer Mehrzahl von Busmodulen der vorbeschriebenen Art, wobei jedem der Deckenleuchten genau eines der Busmodule zugeordnet ist und die Busmodule, eine Modulkaskade bildend miteinander verbunden sind. Das Beleuchtungssystem weist weiterhin einen Bus-Hauptmodul der vorbeschriebenen Art auf, das mit dem Buseingang des ersten in der Modulkaskade stehenden Busmoduls verbunden ist.

Bevorzugt ist vorgesehen, dass sich alle Busmodule mit ein und derselben Startadresse initialisieren. Dies erfolgt bevorzugt wenn die Busmodule mit einer Modulversorgungspannung beaufschlagt werden und/oder ein Reset des Busmoduls durchführt wird.

Bezüglich des Bus-Initialisierungsverfahren wird die Aufgabe gelöst durch ein Bus-Initialisierungsverfahren für ein Beleuchtungssystem, wobei eine Kaskade von Busmodulen mittels eines Bus-Hauptmoduls initialisiert wird, mit den Schritten:
- Beaufschlagen der Busmodule mit einer Modulversorgungspannung, wodurch ein von den Busmodulen jeweils umfasster Controller in Betrieb gesetzt wird;
- Stummschalten eines von den Busmodulen jeweils umfassten Busausgangs; vorzugsweise gleichzeitig mit dem Beaufschlagen der Busmodule mit der Modulversorgungspannung;
- Initialisieren aller Busmodule mit ein- und derselben Startadresse, wobei das Initialisieren durch einen jeweilige Controller selbst und für alle Busmodule unabhängig voneinander erfolgt;
- Zuweisen einer inkrementierten Adresse an das erste in der Kaskade befindliche Busmodul durch das Bus-Hauptmodul und Transparentschalten des Busausgangs des ersten in der Kaskade befindliche Busmoduls, vorzugsweise durch das Busmodul selbst; und
- Zuweisen einer weiterinkrementierten Adresse an das nächste in der Kaskade befindliche Busmodul durch das Bus-Hauptmodul und Transparentschalten des Busausgangs dieses nächsten in der Kaskade befindliche Busmoduls, vorzugsweise durch dieses nächste Busmodul selbst.

Vorzugsweise werden diese Verfahrensschritte in dieser Reihenfolge durchgeführt. In einer bevorzugten Weiterbildung erfolgt das Initialisieren automatisch nach Ablauf einer vorbestimmten Zeitspanne, nachdem das Busmodul mit der Modulversorgungsspannung beaufschlagt wurde. Es ist vorteilhaft, wenn das Transparentschalten des Busausgangs durch Auslösen und Schließen eines Busschalters, der zwischen einem gemeinsamen Eingang und einem gemeinsamen Ausgang eines Busmoduls mit Buseingang und Modulversorgungseingang als gemeinsamem Eingang und Busausgang und Modulversorgungsausgang als ein gemeinsamem Ausgang, also einem Zwei-Draht-Busmodul erfolgt. Damit können auch Zwei-Draht-Busmodule mit Selbstadressierung realisiert werden.

Es hat sich ebenfalls als vorteilhaft herausgestellt, wenn das Verfahren iterativ für jedes weitere etwaig in der Kaskade befindliche Busmodul durchgeführt wird. Vorzugsweise wird das Verfahren dann beendet, wenn vom Bus-Hauptmodul detektiert wird, das an dem Busmodul dem zuletzt eine weiterinkrementierten Adresse zugewiesen wurde, kein weiteres Busmodul nachgeschaltet ist.

Bezüglich des Computerprogrammprodukt wird die Aufgabe gelöst durch ein Computerprogrammprodukt mit Programmmodulen welche, wenn geladen in ein Netzwerkgerät, vorzugsweise ein Mobilgerät ausgelegt sind zum:
- Abfragen eines gewünschten eine jeweilige Deckenleuchte betreffenden Parametersatzes über eine Benutzerschnittstelle des Netzwerkgeräts;
- Übertragen eines für eine jeweilige Deckenleuchte bestimmtes Steuersignals, das dem gewünschten Parametersatz entspricht, an ein Bus-Hauptmodul eines Beleuchtungssystems;
- Empfangen eines die jeweilige Deckenleuchte betreffenden Statussignals vom Bus-Hauptmodul; und/oder
- Ausgeben des Statussignals über die Benutzerschnittstelle des Netzwerkgeräts.

In einer besonders bevorzugten Ausgestaltung schließt der Parametersatz wenigstens einen Abstrahlwinkel der Leuchteneinheit, eine Helligkeit des LED-Leuchtmittels und/oder einen Schwenkwinkel der Leuchteneinheit ein. Der Parametersatz kann beispielsweise weitere Parameter einschließen, wie beispielsweise eine anzusteuernde LED Farbe (z.B. RGB) oder eine Anzahl von anzusteuern LEDs, beispielsweise innerhalb einer LED-Matrix oder LED-Lichtleiste.

In einer weiteren Ausgestaltung können die Programmodule ausgelegt sein zum auslesen von Lagesensoren, die beispielsweise von einem als Mobilgerät bereitgestellten Netzwerkgerät umfasst sind. Dies können also Lagesensoren, beispielsweise Gyrosensoren, eines Handys oder Tabletts sein. Vorzugsweise sind die Programmodule ausgelegt zum Übertragen eines für eine jeweilige Deckenleuchte bestimmtes Steuersignal in Abhängigkeit der ausgelesenen Lageinformationen.

Weiter bevorzugt sind die Programmodule ausgelegt ein für eine jeweilige Deckenleuchte bestimmtes Steuersignal in Abhängigkeit der ausgelesenen Lageinformationen derart auszugeben, dass ein oder mehrere Deckenleuchten auf das als Mobilgerät bereitgestelltes Netzwerkgerät ausgerichtet und/oder fokussiert ist bzw. sind. Derart kann beispielsweise realisiert sein dass eine in einem Museum oder in einer Galerie installierte Deckenleuchte einen Besucher verfolgt oder gezielt dessen Interesse auf ein Ausstellungsstück lenkt. Das Bus-Hauptmodul kann beispielsweise ausgebildet sein einen Transponder, beispielsweise ein RFID-Tag, zum Zwecke einer solchen Folgeregelung auszulesen. Der Transponder kann beispielsweise einem Besucher ausgehändigt werden oder sogar in ein Besucherticket oder dergleichen integriert sein.

Gleichzeitig kann das Bus-Hauptmodul ausgebildet sein beispielsweise eine Deckenleuchte zu dimmen oder gar ganz abzuschalten, wenn eine Person aus dem Lichtkegel einer jeweiligen Deckenleuchte heraustritt.

In einer bevorzugten Ausgestaltung sind die Programmodule ausgelegt zum Übertragen eines Setups für eine Mehrzahl von Deckenleuchten. Ein solches Setup kann beispielsweise eine Vielzahl von Deckenleuchten betreffen, die beispielsweise in einem Konzertsaal oder einem Konferenzsaal installiert sind.

Die Aufgabe wird ebenfalls gelöst durch ein Netzwerkgerät, insbesondere Mobilgerät, das ausgebildet ist einer drahtlosen Verbindung, vorzugsweise einer WLAN-Verbindung beizutreten, wobei auf dem Netzgerät ein vorgeschriebenes Computerprogrammprodukt installiert ist und/oder ausgeführt wird.

Bevorzugte Ausführungsbeispiele der Erfindung werden nun mit Bezug auf die Figuren erläutert. Es zeigen:
- Fig. 1: in schematischer Darstellung ein bevorzugtes Ausführungsbeispiel eines erfindungsgemäßen Busmoduls;
- Fig. 2: in schematischer Darstellung ein bevorzugtes Ausführungsbeispiel eines erfindungsgemäßen Bussystems; und
- Fig. 3: ein Ausführungsbeispiel eines erfindungsgemäßen Busmoduls;
- Fig. 4: ein Ausführungsbeispiel eines erfindungsgemäßen Beleuchtungssystems; und
- Fig. 5: ein Ausführungsbeispiel eines erfindungsgemäßen Initialisierungsverfahrens.

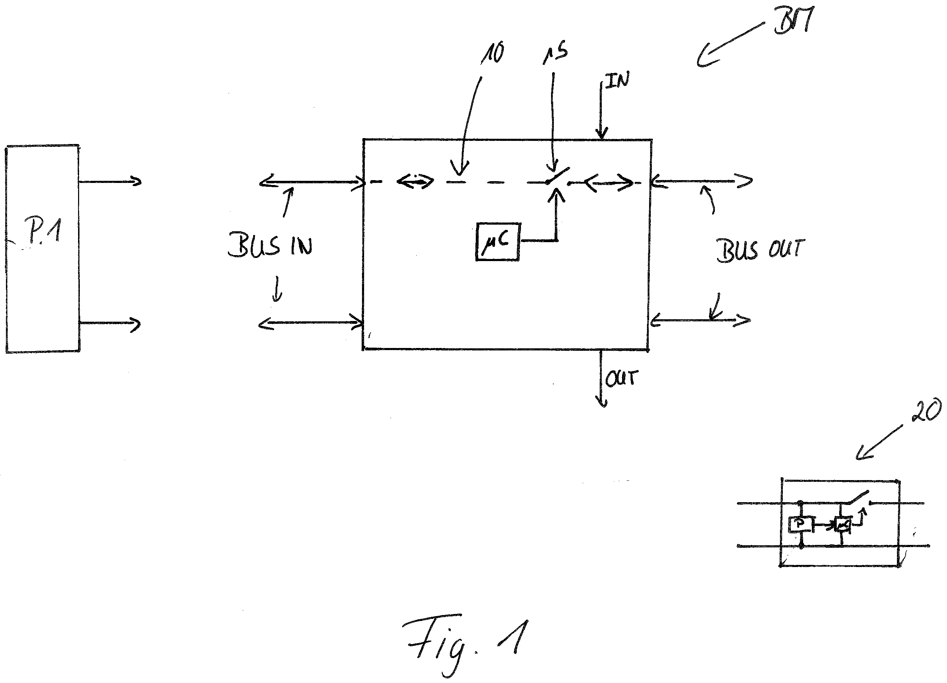

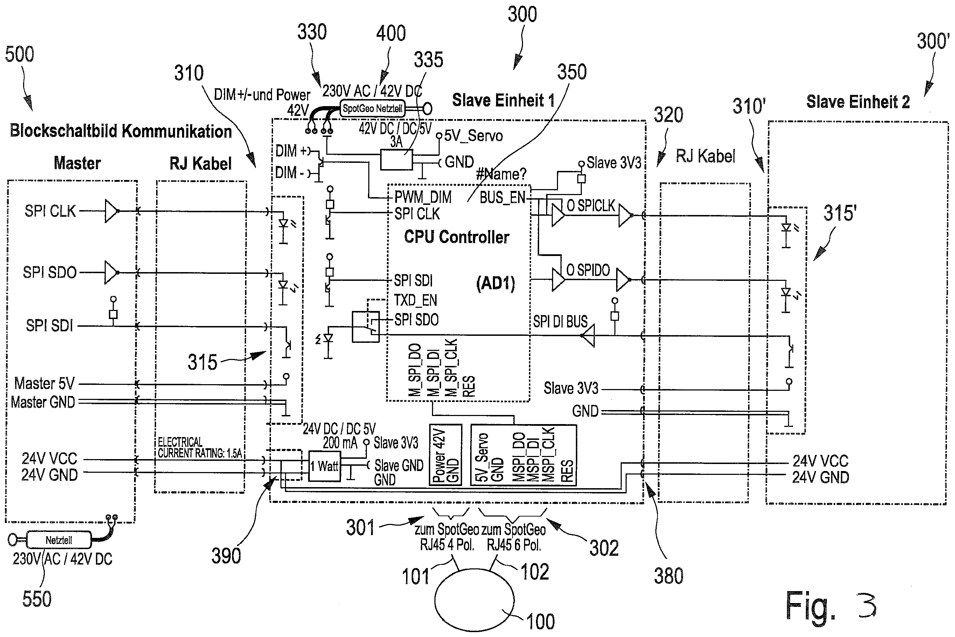

Figur 1 zeigt in einer schematischen Darstellung ein Busmodul BM gemäß dem ersten Aspekt der Erfindung. Das Busmodul BM umfasst einen Controller µC zum Ansteuern eines Sensors oder Aktors. In der hier gezeigten Ausführungsform weist das Busmodul hierzu Anschlüsse IN, OUT für Sensor, Aktor und gegebenenfalls die Stromversorgung eines solchen auf. Das Busmodul BM umfasst weiter einen Buseingang BUS IN sowie einen Busausgang BUS OUT und ist über den Buseingang BUS IN und den Busausgang BUS OUT kaskadierbar. Buseingang BUS IN und Busausgang BUS OUT sind dabei über eine schaltbare Verbindung 10 verbunden, über die die Kommunikation zwischen Buseingang und Busausgang im geschlossenen Zustand erfolgen kann und die im geöffneten Zustand die Kommunikation zwischen Buseingang BUS IN und Busausgang BUS OUT unterbricht. Die schaltbare Verbindung 10 umfasst hier einen Schalter 15, der vom Controller µC des Busmoduls gesteuert wird. Insbesondere ist der Controller µC ausgebildet, ein Öffnen oder Schließen des Schalters 15 zu veranlassen. Das hier gezeigte Ausführungsbeispiel ist ein Zwei-Draht-Busmodul. Hier erfolgt die Beaufschlagung des Busmoduls mit einer Modulversorgungsspannung über den Buseingang BUS IN. Exemplarisch ist dies hier angedeutet mit der Spannungsversorgung P1, die an den Buseingang angeschlossen werden kann. In einer hier nicht dargestellten Ausführungsvariante, auf die in Bezug auf Figur 3 näher eingegangen wird, kann ein erfindungsgemäßes Busmodul aber auch einen separaten Modulversorgungseingang aufweisen, über den das Busmodul und damit der Controller µC mit Spannung versorgt wird. Der gezeigte Controller µC ist ausgebildet, nach Empfangen eines entsprechenden vorbestimmten Buseingangssignals oder bei Beaufschlagung des Buseingangs mit der Modulspannung eine Initialisierungsroutine auszulösen, bei der zunächst die schaltbare Verbindung 10 geöffnet wird und der Controller das Busmodul mit einer vorbestimmten Startadresse (AD1) adressiert und im nächsten Schritt dem Busmodul eine inkrementierte Adresse selbst zuweist. Hierzu ist der Controller µC in der gezeigten Ausführungsform ausgebildet, die inkrementierte Adresse ausgehend von der vorbestimmten Startadresse zu inkrementieren, falls das Busmodul nach Initialisieren mit der vorbestimmten Startadresse kein Adresssignal eines verbundenen Busmoduls erhält und der Controller ist weiterhin ausgebildet, falls das Busmodul nach Initialisieren mit der vorbestimmten Startadresse ein Adresssignal eines verbundenen Busmoduls erhält, die inkrementierte Adresse ausgehend von einer Adresse entsprechend dem Adresssignal zu inkrementieren. Weiterhin ist der Controller ausgebildet, nach dem Zuweisen der inkrementierten Adresse die Initialisierungsroutine abzuschließen und die schaltbare Verbindung 10 durch Schließen des Schalters 5 zu veranlassen. Damit endet die zuvor durch ein Öffnen der schaltbaren Verbindung 10 entstandene Stummschaltung des Busausgangs BUS OUT und das Busmodul BM kann mit einem möglicherweise nachgeschalteten weiteren Busmodul eines Bussystems kommunizieren. Unter dem Bezugszeichen 20 ist ein Blockschaltbild für ein erfindungsgemäßes Busmodul gezeigt.

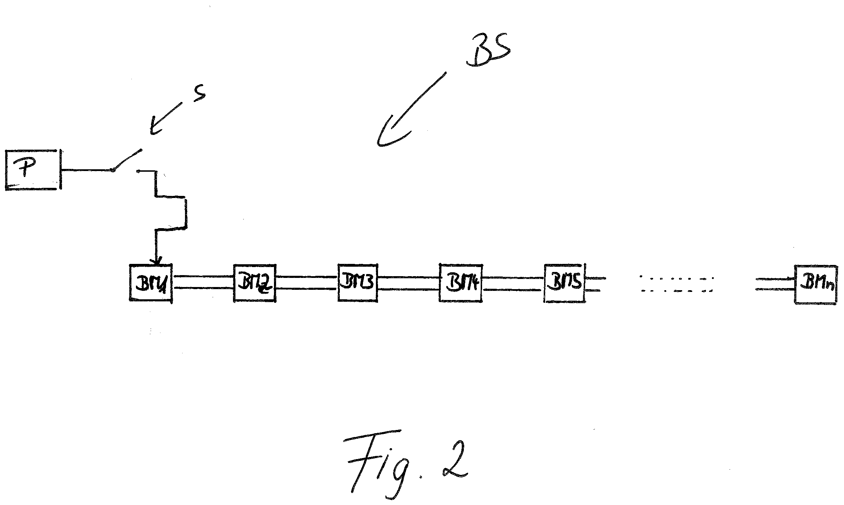

In Figur 2 ist schematisch eine Ausführungsform eines Bussystems BS gemäß dem dritten Aspekt der Erfindung gezeigt. Das Bussystem BS umfasst eine Kaskade von Busmodulen BM1, BM2, BM3, BM4, BM5, BMn. Im hier gezeigten Ausführungsbeispiel sind die Busmodule sämtlich Zwei-Draht-Busmodule, wie sie beispielsweise im Ausführungsbeispiel der Figur 1 gezeigt sind. Die Spannungsversorgung P stellt die Versorgung für das gesamte Bussystem zur Verfügung. Über den Schalter S kann das Bussystem BS mit Spannung beaufschlagt werden. Gemäß dem erfindungsgemäßen Verfahren läuft die Adressierung des Bussystems für dieses Ausführungsbeispiel wie folgt ab: Nach Spannungsbeaufschlagung des Buseingangs des ersten Busmoduls BM1 in der Kaskade öffnet der Controller des Busmoduls BM1 zunächst die schaltbare Verbindung und initialisiert das Busmodul BM1 gleichzeitig mit der vorbestimmten Startadresse AD1. Erfolgt nach einer vorbestimmten Zeitspanne kein Eingang eines Adressierungssignals oder eines weiteren Buseingangssignals, so weist der Controller µC dem Busmodul BM1 eine inkrementierte Adresse basierend auf der Startadresse AD1 zu. Sodann veranlasst der Controller µC das Schließen der schaltbaren Verbindung. Damit ist eine Kommunikation zwischen dem ersten Busmodul BM1 und dem zweiten Busmodul BM2 nunmehr möglich. Sobald die schaltbare Verbindung des ersten Busmoduls BM1 geschlossen ist liegt am Buseingang des zweiten Busmoduls BM2 die Modulversorgungsspannung an und der Controller des Busmoduls BM2 startet seine Initialisierungsroutine, indem er zunächst die schaltbare Verbindung 10 öffnet und gleichzeitig das Busmodul BM2 mit der vorbestimmten Startadresse AD1 initialisiert. Nach Empfangen eines Adresssignals vom ersten Busmodul BM1 weist der Controller µC des zweiten Busmoduls BM2 diesem eine inkrementierte Adresse basierend auf dem Adresssignal des ersten Busmoduls BM1 zu, das heißt eine weiter inkrementierte Adresse. Danach veranlasst der Controller des Busmoduls BM2 das Schließen der schaltbaren Verbindung des Busmoduls BM2 und ermöglicht damit die Kommunikation auch mit dem dritten Busmodul BM3 beziehungsweise, beaufschlagt damit auch das dritte Busmodul BM3 mit der Modulversorgungsspannung. Iterativ wird die gesamte Kaskade von Busmodulen derart durchlaufen, bis auch das letzte Busmodul BMn des Bussystems BS von seinem Controller eine weiter inkrementierte Adresse zugewiesen bekommen hat und die schaltbare Verbindung des Busmoduls BMn geschlossen ist. Stellt der Controller des letzten Busmoduls BMn der Kaskade fest, dass nach Schließen der schaltbaren Verbindung kein Adresssignal mit der Startadresse AD1 empfangen wird endet, der gesamte Initialisierungsprozess für das Bussystem und ein Steuerbetrieb der Busmodule der gesamten Kaskade beginnt.

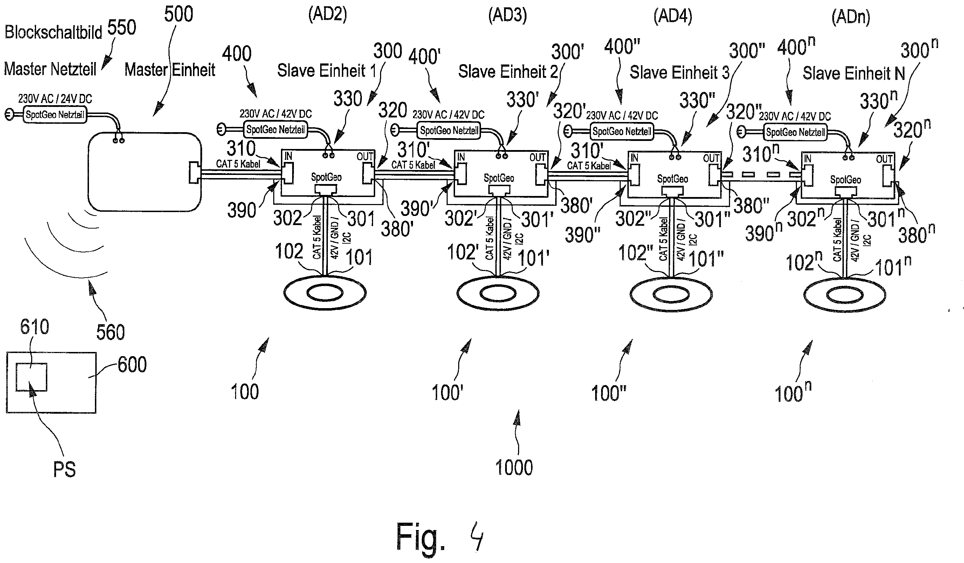

Mit Bezug auf Figur 3 soll nun ein bevorzugtes Ausführungsbeispiel eines erfindungsgemäßen Busmoduls 300 beschrieben werden. Das Busmodul 300 weist einen Controller 350 zum Ansteuern einer Deckenleuchte 100 auf. Das Busmodul 300 weist einen Buseingang 310 und einen Busausgang 320 auf. Das Busmodul 300 ist über den Buseingang 310 und den Busausgang 320 kaskadierbar (vergleiche Figur 4.)

Das Busmodul 300 verfügt über einen Leistungseingang 330 zum Anschluss eines externen dimmbaren LED-Netzteils 400. Das Busmodul 300 verfügt ferner über einen Leistungsausgang 301 zum Anschluss eines LED-Leuchtmittels über einen Leistungseingang 101 der Deckenleuchte 100.

Das Busmodul 300 weist ferner einen Steuereingang 302 zum Ausgeben eines Steuersignals an die Deckenleuchte 100 auf. Der Steuerausgang 302 ist mit einem Steuereingang 102 der Deckenleuchte 100 verbunden. Über den Steuerausgang 302 erfolgt nicht nur eine Steuerung der Antriebe der Deckenleuchte 100, sondern auch eine Spannungsversorgung der Antriebe.

Die Versorgungsspannung, die über den Steuerausgang 302 aus gegeben wird, ist bezüglich einer am Leistungseingang 330 und vom LED-Netzteil 400 stammenden Spannung herabgesetzt. Vorliegend erfolgt dies durch einen Spannungswandler 335, der 42 V DC auf 5 V DC umsetzt.

Das Busmodul 300 verfügt ebenfalls über einen Modulversorgungseingang 390, der elektrisch mit dem Controller 350 zur Versorgung des Controllers 350 mit einer Versorgungsspannung verbunden ist. Über diesen Modulversorgungseingang 390 kann der Controller 350 unabhängig von der am Leistungseingang 330 anliegende Spannung versorgt elektrisch werden. Das Busmodul 300 weist ebenfalls einen Modulversorgungsausgang 380 auf. Der Modulversorgungseingang 390 ist auf den Modulversorgungsausgang 380 durchgeschleift.

Wie ebenfalls der Figur 3 entnommen werden kann, ist der Buseingang 310 des Busmoduls 300 potentialfrei ausgebildet, vorliegend mittels eines Optokopplers 315.

Der Controller 350 des Busmoduls 300 ist ausgebildet, bei Empfang eines Buseingangssignals über den Buseingang 310 eine Initialisierungsroutine durchzuführen und erst nach Abschluss der Initialisierungsroutine das Bussignal den Busausgang 320 auszugeben. Dies wird später noch genauer erläutert.

In Figur 3 ist der Modulversorgungseingang 390 gerade mit einer Spannung beaufschlagt worden, die vom Zentralnetzteil 550 stammt. Daher hat sich der Controller 350 zunächst mit einer Startadresse AD1 initialisiert. Der Controller 350 des Busmoduls 300 der Figur 1 ist zur Kommunikation mittels SPI-Protokoll ausgebildet.

Auf der linken Seite in Figur 3 zu erkennen ist ein erfindungsgemäßes Bus-Hauptmodul 500 zum Betreiben des Busmoduls 300. Das Bus-Hauptmodul 500 arbeitet als Master, wohingegen das Busmodul 300 als Slave operiert.

Das Bus-Hauptmodul 500 weist einen Busanschluss 520 auf über den das Busmodul 300 angeschlossen ist. Dies erfolgt vorliegend mittels eines RJ Kabels. Andere Kabeltypen sind denkbar.

In Figur 4 ist nunmehr ein Beleuchtungssystem 1000 mit einer Mehrzahl von Deckenleuchten 100, 100', 100", 100n dargestellt. Ebenfalls umfasst vom Beleuchtungssystem 1000 ist eine Mehrzahl von Busmodulen 300, 300', 300", 300n wobei jedem der Deckenleuchten 100, 100', 100", 100n genau ein Busmodul 300, 300', 300", 300n zugeordnet ist.

Die Busmodule 300, 300', 300", 300n sind, eine Modulkaskade bildend, miteinander verbunden. Das Beleuchtungssystem 1000 weist weiterhin ein Bus-Hauptmodul 500 auf das über seinen Busanschluss 520 mit dem Buseingang 310 des ersten in der Modulkaskade stehenden Busmoduls 300 verbunden ist. Über den Busanschluss 520 erfolgt ein Senden eines Bussignals an und ein Empfangen eines Bussignals von dem Busmodul 300.

Das Bus-Hauptmodul 500 ist ausgebildet ist eine drahtlose WLAN-Verbindung 560 zu initiieren. Das Bus-Hauptmodul 500 fungiert als Hotspot. Über die drahtlose WLAN-Verbindung 560 können für die Deckenleuchte 100, 100', 100", 100n bestimmte Steuersignale von einem Mobilgerät 600, beispielsweise einem Tablett, empfangen werden. Gleichzeitig ist das Bus-Hauptmodul 500 ausgebildet über die drahtlose WLAN Verbindung 560 empfangene Steuersignale an die Busmodule 300, 300', 300", 300n weiterzuleiten und von Busmodulen 300, 300', 300", 300n erhaltene Statussignale an das Mobilgerät 600 zu übertragen. Dem Mobilgerät 600 wurde vom Bus-Hauptmodul 500 eine IP Adresse zugewiesen, z.B. mittels DHCP.

Auf dem Mobilgerät 600 installiert ist ein Computerprogrammprodukt in Form einer App. Das Computerprogrammprodukt weist Programmmodule auf, welche, wenn diese auf dem Mobilgerät 600 ausgeführt werden, einen gewünschten eine jeweilige Deckenleuchte 100, 100', 100", 100n betreffenden Parametersatz PS über eine Benutzerschnittstelle 610, beispielsweise ein Touch-Display, abfragen.

Anschließend bewirken die Programmmodule, dass ein für eine jeweilige Deckenleuchte 100, 100', 100", 100n bestimmtes Steuersignal, das dem gewünschten Parametersatz PS entspricht, an das Bus-Hauptmodul 500 des Beleuchtungssystems 1000 weitergegeben werden.

Das Bus-Hauptmodul 500 übermittelt die Steuersignale in Form von Bussignalen an die jeweiligen Busmodule 300, 300', 300", 300n. Die jeweiligen Busmodule 300, 300', 300", 300n setzen die Bussignale in Steuersignale für die jeweilige Deckenleuchte 100, 100', 100", 100n um.

Sobald das gewünschte Steuersignal durch die angesprochene Deckenleuchte 100, beispielsweise durch Verstellen des Abstrahlwinkels, erfolgreich umgesetzt wurde bzw. umgesetzt wird, sendet das betreffende Busmodul 300 ein Statussignal an das Bus-Hauptmodul 500. Das Mobilgerät 600, ausgestattet mit der App, empfängt das die jeweilige Deckenleuchte 100, 100', 100", 100n betreffenden Statussignal vom Bus-Hauptmodul 500 und gibt das Statussignal über die Benutzerschnittstelle 610 aus.

Neben einem Abstrahlwinkel können derart auch die Helligkeit des LED-Leuchtmittels und die Schwenkwinkel der Leuchteneinheit eingestellt werden.

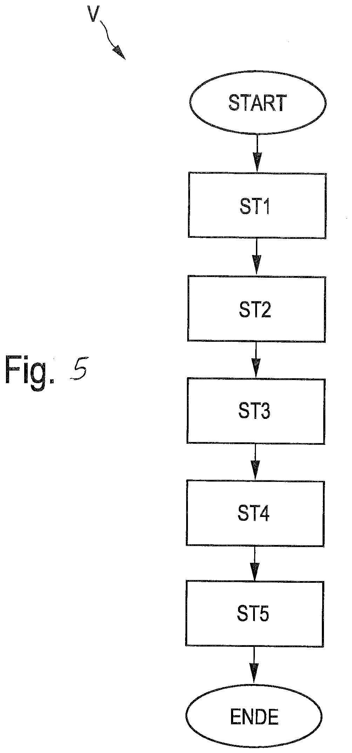

Fig. 5 zeigt nunmehr ein bevorzugtes Ausführungsbeispiel eines erfindungsgemäßen Bus-Initialisierungsverfahren V für ein Beleuchtungssystem 1000 (vgl. Fig. 1). Dabei wird eine Kaskade von Busmodulen 300, 300', 300", 300n mittels des Bus-Hauptmoduls 500 initialisiert.

In einem ersten Schritt ST1 erfolgt ein Beaufschlagen der Busmodule 300, 300', 300", 300n mit einer Modulversorgungspannung, wodurch ein von den Busmodulen 300, 300', 300", 300n jeweils umfasster Controller 350, 350', 350", 350n in Betrieb gesetzt wird.

In einem zeitlich unmittelbar nachfolgenden zweiten Schritt ST2 erfolgt ein Stummschalten eines von den Busmodulen 300, 300', 300", 300n jeweils umfassten Busausgangs 320, 320', 320", 320n.

In einem nachfolgenden dritten Schritt ST3 erfolgt ein Initialisieren aller Busmodule 300, 300', 300", 300n mit ein- und derselben Startadresse AD1 (vgl. Fig. 3). Im einfachsten Fall kann die Startadresse AD1 den Zählerwert "1" annehmen. Das Initialisieren erfolgt durch die Controller 350, 350', 350", 350n. Jeder Controller initialisiert sich selbst und unabhängig von anderen Controllern.

In einem nachfolgenden vierten Schritt ST4 erfolgt ein Zuweisen einer inkrementierten Adresse AD2 an das erste in der Kaskade befindliche Busmodul 300 durch das Bus-Hauptmodul 500 und ein Transparentschalten des Busausgangs 320 des ersten in der Kaskade befindliche Busmoduls 300 durch das Busmodul 300 selbst. Im einfachsten Fall kann die inkrementierte Adresse AD2 den Zählerwert "2" annehmen.

In einem nachfolgenden fünften Schritt ST5 erfolgt ein Zuweisen einer weiterinkrementierten Adresse AD3 an das nächste (zweite) in der Kaskade befindliche Busmodul 300' durch das Bus-Hauptmodul 500 und Transparentschalten des Busausgangs 320' dieses nächsten (zweiten) in der Kaskade befindliche Busmoduls 300' durch dieses nächste (zweite) Busmodul 300' selbst. Im einfachsten Fall kann die weiterinkrementierte Adresse AD3 den Zählerwert "3" annehmen.

Das Verfahren wird iterativ für jedes weitere in der Kaskade befindliche Busmodul 300", 300n durchgeführt wird dann beendet wenn vom Bus-Hauptmodul 500 detektiert wird, das dem Busmodul 300n dem zuletzt eine weiterinkrementierten Adresse ADn zugewiesen wurde, kein weiteres Busmodul nachgeschaltet ist. Im einfachsten Fall kann die weiterinkrementierte (letzte) Adresse ADn den Zählerwert "N+1" annehmen.

Über die Adressen AD2, AD3, AD4 ... ADn können die Busmodule 300, 300', 300", 300n Vom Bus-Hauptmodul 500 angesprochen werden. Sind beispielsweise in einer Modulkaskade genau vier Busmodule vorgesehen, so kann, im einfachsten Fall, dass erste Busmodul über den Zählerwert "2", dass zweite Busmodul über den Zählerwert "3", dass Dritte Busmodul über den Zählerwert "4" und das vierte (letzte) Busmodul über den Zählerwert "fünf" erreicht werden.

Durch dieses Verfahren kann sich das Beleuchtungssystem 1000 ad hoc selbst initialisieren. Es ist kein Adress-Programmieraufwand eines individuellen Busmoduls erforderlich. Somit müssen die Busmodule, wenn sie beispielsweise in hoher Stückzahl angeliefert werden, lediglich miteinander verbunden werden. Nach Beaufschlagen der Modulversorgungsanschlüsse initialisiert sich die Modulkaskade von selbst.

### Bezugszeichenliste

- 10: schaltbare Verbindung
- 15: Schalter
- 100: Deckenleuchte
- 101: Leistungseingang
- 102: Steuereingang
- 300, BM: Busmodul
- 301: Leistungsausgang
- 302, O: Steuerausgang
- 310, BUS IN: Buseingang
- 315: Optokoppler
- 320, BUS OUT: Busausgang
- 330: Leistungseingang
- 335: Spannungswandler
- 350, µC: Controller
- 380: Modulversorgungsausgang
- 390: Modulversorgungseingang
- 400: LED-Netzteil
- 500: Bus-Hauptmodul
- 520: Busanschluss
- 550: Zentralnetzteil
- 560: WLAN-Verbindung
- 600: Mobilgerät
- 610: Benutzerschnittstelle
- 1000: Beleuchtungssystem
- AD1: Startadresse
- AD2: inkrementierte Adresse
- AD3.. ADn: weiterinkrementierte Adresse
- AW: Abstrahlwinkel
- BS: Bussystem
- HA: Hauptachse des LED-Leuchmittels
- IN, OUT: Anschluss
- KM: Kugelmittelpunkt des Lagerrings
- KM': Kugelmittelpunkt der Lagerschale
- PS: Parametersatz
- SA1: erste virtuelle Schwenkachse
- SA2: zweite virtuelle Schwenkachse
- ST1.. ST5: Verfahrensschritte
- V: Bus-Initialisierungsverfahren

## Patentansprüche

1. Busmodul (BM) mit einem Controller (µC) zum Ansteuern eines Sensors oder Aktors, mit einem Buseingang (BUS IN) und einem Busausgang (BUS OUT), wobei das Busmodul (BM) über den Buseingang (BUS IN) und den Busausgang (BUS OUT) kaskadierbar ist und der Buseingang (BUS IN) und der Busausgang (BUS OUT) über eine schaltbare Verbindung, insbesondere eine schaltbare Verbindung (10) umfassend einen bidirektionalen Schalter (15) auf Halbleiterbasis, verbunden sind, wobei
- der Controller (µC) ausgebildet ist, bei Empfang eines vorbestimmten Buseingangssignals (BUS IN) über den Buseingang (BUS IN) oder bei Modulspannungsbeaufschlagung des Buseingangs (BUS IN) eine Initialisierungsroutine, vorzugsweise nach einer vorbestimmten Zeitspanne, durchzuführen und erst nach Abschluss der Initialisierungsroutine das Schließen der schaltbaren Verbindung (10) zu veranlassen und
- der Controller (µC) ausgebildet ist, dem Busmodul (BM) eine inkrementierte Adresse selbst zuzuweisen; **dadurch gekennzeichnet, dass**
- der Controller (µC) ausgebildet ist, das Busmodul (BM) im Rahmen der Initialisierungsroutine mit einer vorbestimmten Startadresse (AD1) zu initialisieren und der Controller (µC) ausgebildet ist, die inkrementierte Adresse ausgehend von der vorbestimmten Startadresse zu inkrementieren, falls das Busmodul (BM) nach Initialisieren mit der vorbestimmten Startadresse kein Adresssignal eines verbundenen Busmodules (BM) erhält und der Controller (µC) ausgebildet ist, falls das Busmodul (BM) nach Initialisieren mit der vorbestimmten Startadresse (AD1) ein Adresssignal eines verbundenen Busmodules (BM) erhält die inkrementierte Adresse ausgehend von einer Adresse entsprechend dem Adresssignal zu inkrementieren.

2. Busmodul (BM) nach Anspruch 1, das als Zwei-Draht-Busmodul (BM) ausgebildet ist, bei dem eine Beaufschlagung des Busmodul (BM)s mit einer Modulversorgungsspannung über den Buseingang (BUS IN) erfolgen kann.

3. Busmodul (BM) nach Anspruch 1 oder 2 mit einem vom Buseingang (BUS IN) separaten Modulversorgungseingang (390), über den der Controller (µC) versorgt werden kann, und mit einem Modulversorgungsausgang (380) auf den der Modulversorgungseingang (390) durchgeschleift ist.

4. Busmodul (BM) nach einem der vorstehenden Ansprüche, bei dem der Controller (µC) ausgebildet ist, im Rahmen der Initialisierungsroutine, das Öffnen der schaltbaren Verbindung (10) vor oder gleichzeitig mit dem Initialisieren des Busmodule (BM) mit der vorbestimmten Startadresse (AD1) zu veranlassen.

5. Busmodul (BM) nach einem der vorstehenden Ansprüche, bei dem der Controller (µC) ausgebildet ist, nach Abschluss der Initialisierungsroutine bei Wegfall der Modulversorgungsspannung die dem Busmodul (BM) zugewiesene Adresse zu speichern und bei Wiederbeaufschlagung mit der Modulversorgungsspannung diese zugewiesene Adresse zu verwenden.

6. Bussystem (BS) umfassend eine Kaskade von Busmodulen (BM) nach einem der Ansprüche 1 bis 5, bei dem jedes Busmodul (BM) der Kaskade von Busmodulen (BM) ausgebildet ist, sich mit ein- und derselben Startadresse (AD1) zu initialisieren.

7. Bus-Initialisierungsverfahren für ein Bussystem (BS) mit einer Kaskade von Busmodulen (BM) **gekennzeichnet durch** die Schritte:
- Initialisieren der Busmodule (BM) mit ein- und derselben Startadresse (AD1), wobei das Initialisieren durch den jeweiligen Controller (µC) des Busmodules (BM) selbst und für alle Busmodule (BM) unabhängig voneinander erfolgt;
- Empfangen eines vorbestimmten Buseingangssignals (BUS IN) über den Buseingang (BUS IN) oder Modulspannungsbeaufschlagen des Buseingangs (BUS IN) (310) des jeweiligen Busmoduls (BM) vor dem Initialisieren und/oder umfassend vor oder gleichzeitig mit dem Initialisieren Öffnen der schaltbaren Verbindung (10).
- Zuweisen einer inkrementierten Adresse (AD2) an das erste in der Kaskade befindliches Busmodul (BM1) und Schließen einer schaltbaren Verbindung (10) des ersten in der Kaskade befindliche Busmoduls (BM1) zwischen einem Buseingang und einem Busausgang des Busmoduls durch einen Controller (µC) des Busmoduls (BM1) selbst;
- Zuweisen einer weiterinkrementierten Adresse (AD3) an ein nächstes in der Kaskade befindliches Busmodul (BM2) und Schließen einer schaltbaren Verbindung (10) dieses nächsten in der Kaskade befindliche Busmoduls (BM2) BM1) zwischen einem Buseingang und einem Busausgang des Busmoduls durch einen Controller (µC) dieses nächsten Busmoduls (BM2) selbst, wobei
das Zuweisen der inkrementierten Adresse (AD2) an das erste in der Kaskade befindliche Busmodul (BM) und das Zuweisen der weiterinkrementierten Adresse durch den Controller (µC) des Busmoduls (BM) selbst erfolgt.

8. Bus-Initilialisierungsverfahren nach Anspruch 7, bei dem das Öffnen gleichzeitig mit einem Modulspannungsbeaufschlagen des Buseingangs (BUS IN)s oder des Modulversorgungseingangs erfolgt.

## Claims

1. Bus module (BM) with a controller (µC) for controlling a sensor or actuator, with a bus input (BUS IN) and a bus output (BUS OUT), wherein the bus module (BM) is cascadable via the bus input (BUS IN) and the bus output (BUS OUT) and the bus input (BUS IN) and the bus output (BUS OUT) are connected via a switchable connection, in particular a switchable connection (10) comprising a bidirectional switch (15) based on semiconductors, wherein
- the controller (µC) is designed, upon receipt of a predetermined bus input signal (BUS IN) via the bus input (BUS IN) or upon application of the module voltage to the bus input (BUS IN), to perform an initialisation routine, preferably after a predetermined time interval, and to initiate the closure of the switchable connection (10) only after termination of the initialisation routine and
- the controller (µC) is designed by itself to assign the bus module (BM) an incremented address; **characterised in that**
- the controller (µC) is designed to initialise the bus module (BM) in the context of the initialisation routine with a predetermined start address (AD1) and the controller (µC) is designed to increment the incremented address starting from the predetermined start address, if the bus module (BM), after initialisation with the predetermined start address, receives no address signal of a connected bus module (BM) and the controller (µC) is designed, if the bus module (BM) receives an address signal of a connected bus module (BM) after initialisation with the predetermined start address (AD1), to increment the incremented address starting from an address corresponding to the address signal.

2. Bus module (BM) according to claim 1, which is designed as a two-wire bus module (BM) in which a module supply voltage can be applied to the bus module (BM) via the bus input (BUS IN).

3. Bus module (BM) according to claim 1 or 2, having a module supply input (390) separate from the bus input (BUS IN), via which the controller (µC) can be supplied, and having a module supply output (380) through which the module supply input (390) is looped.

4. Bus module (BM) according to any of the preceding claims, in which the controller (µC) is designed, in the context of the initialisation routine, to open the switchable connection (10) before or at the same time as the initialisation of the bus module (BM) with the predetermined start address (AD1).

5. Bus module (BM) according to any of the preceding claims, wherein the controller (µC) is designed to store the address assigned to the bus module (BM) after termination of the initialisation routine upon outage of the module supply voltage and to use this assigned address when the module supply voltage is applied again.

6. Bus system (BS) comprising a cascade of bus modules (BM) according to any of claims 1 to 5, in which each bus module (BM) of the cascade of bus modules (BM) is designed to initialise with the same start address (AD1).

7. Bus initialisation method for a bus system (BS) with a cascade of bus modules (BM) **characterised by** the steps:
- initialising the bus modules (BM) with the same start address (AD1), wherein the initialisation by the respective controller (µC) of the bus module (BM) itself and for all bus modules (BM) takes place independently of each other;
- receiving a predetermined bus input signal (BUS IN) via the bus input (BUS IN) or application of the module voltage to the bus input (BUS IN) (310) of the respective bus module (BM) before initialising and/or comprising opening of the switchable connection (10) before or at the same time as the initialising.
- assigning an incremented address (AD2) to the first cascaded bus module (BM1) and closing a switchable connection (10) of the first bus module (BM1) in the cascade between a bus input and a bus output of the bus module by a controller (µC) of the bus module (BM1) itself;
- assigning a further incremented address (AD3) to a next bus module (BM2) in the cascade and closing a switchable connection (10) of this next bus module (BM2) BM1) in the cascade between a bus input and a bus output of the bus module by a controller (µC) of this next bus module (BM2) itself, wherein the assigning of the incremented address (AD2) to the first bus module (BM) in the cascade and the assigning of the further incremented address are performed by the controller (µC) of the bus module (BM) itself.

8. Bus initialisation method according to claim 7, wherein the opening occurs at the same time as an application of the module voltage to the bus input (BUS IN) or the module supply input.

## Revendications

1. Module (BM) de bus, comprenant une unité (µC) de commande pour commander un capteur ou un actionneur, comprenant une entrée (BUS IN) de bus et une sortie (BUS OUT) de bus, le module (BM) de bus pouvant être mis en cascade par l'entrée (BUS IN) de bus et la sortie (BUS OUT) de bus et l'entrée (BUS IN) de bus et la sortie (BUS OUT) de bus étant reliées par une liaison de connexion, notamment une liaison (10) pouvant être connectée, comprenant un interrupteur (15) bidirectionnel à base de semi-conducteur, dans lequel
- l'unité (µC) de commande est constituée pour, à la réception d'un signal (BUS IN) d'entrée de bus défini à l'avance par l'entrée (BUS IN) de bus ou à l'application d'une tension de module à l'entrée (BUS IN) de bus, effectuer une routine d'initialisation, de préférence après un laps de temps défini à l'avance, et provoquer, seulement à la fin de la routine d'initialisation, la fermeture de la liaison (10) pouvant être connectée et
- l'unité (µC) de commande est constituée pour affecter soi-même au module (BM) de bus une adresse incrémentée; **caractérisé en ce que**
- l'unité (µC) de commande est constituée pour initialiser le module (BM) de bus dans le cadre de la routine d'initialisation par une adresse (AD1) de lancement définie à l'avance et/ou l'unité de commande est constituée pour incrémentée l'adresse incrémentée à partir de l'adresse de lancement définie à l'avance, si le module (BM) de bus, après initialisation par l'adresse de lancement définie à l'avance, ne reçoit pas de signal d'adresse d'un module (BM) de bus relié et l'unité (µC) de commande est constituée pour, si le module (BM) de bus, après initialisation par l'adresse (AD1) de lancement définie à l'avance, reçoit une adresse de bus d'un module (BM) de bus relié, incrémenter l'adresse incrémentée à partir d'une adresse correspondant au signal d'adresse.

2. Module (BM) de bus suivant la revendication 1, **caractérisé en ce qu'**il est constitué en module (BM) de bus à deux fils, dans lequel l'application d'une tension d'alimentation de module au module (BM) de bus peut s'effectuer par l'entrée (BUS IN) de bus.

3. Module (BM) de bus suivant la revendication 1 ou 2, comprenant une entrée (390) d'alimentation de module, qui est distincte de l'entrée (BUS IN) de bus et par laquelle l'unité (µC) de commande peut être alimentée et comprenant une sortie (380) d'alimentation de module sur laquelle l'entrée (390) d'alimentation de module est bouclée.

4. Module (BM) de bus suivant l'une des revendications précédentes, dans lequel l'unité (µC) de commande est constituée pour provoquer, par l'adresse (AD1) de lancement définie à l'avance, dans le cadre de la routière d'initialisation, l'ouverture de la liaison (10) pouvant être connectée avant ou en même temps que l'initialisation du module (BM) de bus.

5. Module (BM) de bus suivant l'une des revendications précédentes, dans lequel l'unité (µC) de commande est constituée pour, après la fin de la routine d'initialisation, en cas de suppression de la tension d'alimentation du module, mémoriser l'adresse affectée au module (BM) de bus et, à la réapplication de la tension d'alimentation du module, utiliser cette adresse affectée.

6. Système (BS) de bus, comprenant une cascade de modules (BM) de bus suivant l'une des revendications 1 à 5, dans lequel chaque module (BM) de bus de la cascade de modules (BM) de bus est constitué pour initialiser par une seule et même adresse (AD1) de lancement.

7. Procédé d'initialisation de bus pour un système (BS) de bus, comprenant une cascade de modules (BM) de bus, **caractérisé par** les stades :
- initialisation des modules (BM) de bus par une seule et même adresse (AD1) de lancement, l'initialisation s'effectuant par l'unité (µC) de commande respective du module (BM) de bus soi-même et pour tous les modules (BM) de bus indépendamment les uns des autres;
- réception d'un signal (BUS IN) d'entrée de bus défini à l'avance par l'entrée (BUS IN) de bus ou application d'une tension de module à l'entrée (BUS IN) (310) de bus du module (BM) de bus respectif avant l'initialisation et/ou comprenant avant ou en même temps que l'initialisation l'ouverture de la liaison (10) pouvant être connectée;
- affectation d'une adresse (AD2) incrémentée au premier module (BM1) de bus se trouvant dans la cascade et fermeture d'une liaison (10) pouvant être connectée du premier module (BM1) de bus se trouvant dans la cascade, entre une entrée de bus et une sortie de bus du module de bus, par une unité (µC) de commande du module (BM1) de bus soi-même;
- affectation d'une adresse (AD3) encore incrémentée au module (BM2) de bus suivant dans la cascade et fermeture d'une liaison (10) pouvant être connectée de ce module (BM2)BM1) de bus suivant dans la cascade, entre une entrée de bus et une sortie de bus du module de bus par une unité (µC) de commande de ce module (BM2) de bus suivant soi-même, dans lequel
l'affectation de l'adresse (AD2) incrémentée au premier module (BM) de bus se trouvant dans la cascade et l'affectation de l'adresse encore incrémentée s'effectue par l'unité (µC) de commande du module (BM) de bus soi-même.

8. Procédé d'initialisation de bus suivant la revendication 7, dans lequel l'ouverture s'effectue en même temps qu'une application de tension de module à l'entrée (BUS IN) du bus ou à l'entrée d'alimentation du module.
